## Europäisches Patentamt
## European Patent Office
## Office européen des brevets

(19)

(11) Numéro de publication: **0 008 995**
**B1**

(12)

# FASCICULE DE BREVET EUROPEEN

(45) Date de publication du fascicule du brevet:
06.10.82

(51) Int. Cl.³: **F 16 D 1/10, F 16 L 37/00**

(21) Numéro de dépôt: 79420040.2

(22) Date de dépôt: 27.08.79

(54) **Dispositif de raccordement amovible pour ligne de tubes.**

(30) Priorité: **30.08.78 FR 7825577**

(43) Date de publication de la demande:
**19.03.80 Bulletin 80/6**

(45) Mention de la délivrance du brevet:
**06.10.82 Bulletin 82/40**

(84) Etats contractants désignés:
**DE GB NL**

(56) Documents cités:
**DE-B-1 019 131**
**FR-A-1 413 440**
**FR-A-1 503 146**
**FR-A-2 031 326**
**FR-A-2 323 041**
**US-A-3 219 373**
**US-A-3 500 556**
**»Eléments de construction...« R. PRUD-**
**HOMME et autres, tome III, 1ére partie; 4. édition,**
**DUNOD, Paris 1967, pages 112 et 113**

(73) Titulaire: **UGINE ACIERS, 10, rue du Général Foy,
F-75008 Paris (FR)**

(72) Inventeur: **Baltenneck, Serge, 21, rue Mauriac Vemars,
F-95470 Survilliers (FR)**
Inventeur: **Fyot, Christian, 96, Allée Robillard,
F-93320 Les Pavillons Sous Bois (FR)**

(74) Mandataire: **Givord, Jean-Pierre et al, PECHINEY UGINE
KUHLMANN 28, rue de Bonnel, F-69433 Lyon
Cedex 3 (FR)**

BUNDESDRUCKEREI BERLIN

Dispositif de raccordement amovible pour ligne de tubes

Le dispositif qui fait l'objet de l'invention concerne les installations de traitement au défilé de tubes cylindriques métalliques ou non.

Il concerne plus particulièrement les installations de traitement de tubes au défilé dans lesquelles des tronçons de tubes disposés bout à bout doivent circuler en ligne, suivant un axe défini, à travers une ou plusieurs enceintes de traitement contenant un ou plusieurs fluides, liquides et/ou gazeux, les tronçons de tubes étant animés d'un mouvement de rotation autour de l'axe.

Dans les installations de ce type, on se propose le plus souvent de traiter la surface extérieure de chaque tronçon de tube, tandis que la surface intérieure doit être, de préférence protégée de l'atteinte des fluides, éventuellement agressifs, contenus dans la ou les enceintes. Par ailleurs, il est en général nécessaire d'introduire, à l'entrée de l'installation, les tronçons de tube l'un après l'autre, en raccordant chaque nouveau tronçon au précédent de la façon la plus rapide et la plus facile. Le moyen de raccordement utilisé doit permettre la transmission du mouvement de rotation d'un tube à l'autre. De même, du côté de la sortie de l'installation, il est souhaitable de pouvoir séparer, au fur et à mesure, chaque tronçon de tube du tronçon qui le suit, sans aucune difficulté.

Le FR-A-1 502 148 décrit un moyen de raccordement, en particulier pour tubes présentant une grande résistance à la traction et à la torsion. Il consiste à entailler en biseau les extrémités des tubes, les biseaux étant inclinés en direction opposée à celle des extrémités libres, puis à superposer les deux parties entaillées et à les maintenir par un manchon. Is est proposé également de réaliser ces biseaux sur deux embouts de raccordement engagés en partie dans les tubes à joindre et maintenus l'un contre l'autre par un manchon de recouvrement et un manchon de maintien en deux parties à serrage élastique. Un tel dispositif qui présente une bonne résistance au pliage a le gros inconvénient de nécessiter un assemblage relativement compliqué qui fait appel à cinq pièces élémentaires présentant au moins trois dessins différents. De plus, le mode d'assemblage des embouts de raccordement avec les tubes à joindre n'est pas décrit, et l'utilisation du collage ou du brasage, ou du goupillage qui est signalée comme possible par ailleurs, ne permet pas un assemblage rapide. De même, ce dispositif ne permet pas l'accouplement et le désaccouplement de deux tronçons de tubes par simple coulissement de ceux-ci le long d'axe commun. Une telle possibilité est d'un intérêt particulier dans le cas d'une installation dans laquelle les tronçons de tubes circulent bout à bout sur une même ligne.

L'ouvrage »Eléments de construction à l'usage de l'ingénieur« de R. PRUDHOMME, A. L. TOURANCHEAU et A. KERGOAT (Tome III — 1ère partie — 4ème édition publié par DUNOD en 1967 — pages 111 à 113) décrit des dispositifs d'embrayage à entraînement instantané pour des arbres rotatifs, dans lesquels des couronnes dentées sont montées autour des extremités de deux arbres disposés bout à bout qui se déplacent uniquement en rotation.

L'une des couronnes, grâce à un système de clavetage coulissant peut se déplacer le long de l'un des deux arbres de façon à venir engrener avec l'autre.

Un tel dispositif ne peut convenir pour assurer de façon amovible la liaison non pas entre deux arbres soigneusement usinés, pour recevoir les couronnes, mais entre deux tubes non préparés.

De plus, ce dispositif ne pourrait pas accompagner une ligne de tubes, et traverser une ou plusieurs enceintes de traitement contenant des fluides le plus souvent agressifs.

Le dispositif de raccordement amovible qui fait l'objet de l'invention permet de résoudre l'ensemble de ces problèmes. Il présente, en outre, deux avantages supplémentaires très importants:

En premier lieu, le dispositif est constitué par un type de pièce unique dont une extrémité peut être solidarisée par emboîtement avec l'extrémité d'un tube, et dont l'autre est conçue pour pouvoir se raccorder en s'engageant par simple coulissement dans une autre pièce identique, ce qui facilite beaucoup les montages et démontages.

En second lieu, la forme de la pièce est telle que lorsque deux pièces identiques sont engagées bout à bout l'une dans l'autre, leurs diamètres extérieurs sont pratiquement égaux à ceux des tubes, ce qui permet le franchissement de passages, ménagés dans les parois d'enceintes, avec un jeu très faible, ces passages pouvant même être équipés de joints d'étanchéité.

Le dispositif est constitué d'une pièce allongée présentant un axe de révolution.

L'extrémité destinée à être solidarisée par emboîtement avec l'extrémité d'un tube, comporte une zone cylindrique ou légèrement tronconique, en général évidée à l'intérieur, dont les dimensions sont déterminées de façon à pouvoir s'emboîter facilement dans l'orifice des tubes à joindre, tout en assurant un serrage satisfaisant. Le serrage doit permettre, d'une part, de transmettre le couple nécessaire pour la rotation des tubes autour de leur axe et, d'autre part, d'assurer dans la plupart des cas une étanchéité suffisante pour éviter la pénétration du fluide à l'intérieur des tubes.

La zone de raccordement comporte une partie sensiblement cylindrique dont le diamètre est, de préférence, voisin du diamètre extérieur des tubes à raccorder. Cette partie cylindrique est limitée du côté opposé à la zone d'emboîtement par une surface de raccordement présentant des reliefs et des cruex disposés de façon alternée autour de l'axe suivant un motif élémentaire qui se renouvelle de façon identique au moins deux fois autour de la circonférence, la surface constituant le motif élémentaire présentant un axe de symétrie passant par l'axe du dispositif et perpendiculaire à celui-ci. Il est de plus nécessaire que les parties en relief et les parties en creux homologues aient des formes emboîtables.

Comme on le verra par l'exemple, ces formes sont, de préférence, réalisées de façon que, dans le sens de rotation imposé, la résultante des efforts ne favorise pas le dégagement de deux pièces engagées l'une dans l'autre.

L'exemple et les figures ci-après, décrivent de façon plus détaillée un mode de mise en oeuvre de l'invention.

La figure 1 est une vue en élévation du dispositif suivant l'invention.

La figure 2 est une coupe axiale du dispositif de la figure 1.

La figure 3 est une vue en plan suivant A de la figure 1.

La figure 4 est une vue en élévation de deux dispositifs, montés sur deux tronçons de tubes représentés en coupe axiale, et disposés en face l'un de l'autre avant engagement.

La figure 5 est une vue des deux tronçons de tubes de la figure 4 rapprochés l'un de l'autre jusqu'à engagement partiel des deux surfaces de raccordement l'une dans l'autre.

### Exemple

On se propose de raccorder entre eux de façon amovible des tronçons de tubes en acier inoxydable de 20 mm de diamètre extérieur et 18,4 mm de diamètre intérieur, de façon à pouvoir les faire circuler de façon continue à travers une ligne de traitement par des solutions. On désire, en même temps, obturer de façon étanche ces tubes pour empêcher la pénétration des solutions de traitement à l'intérieur.

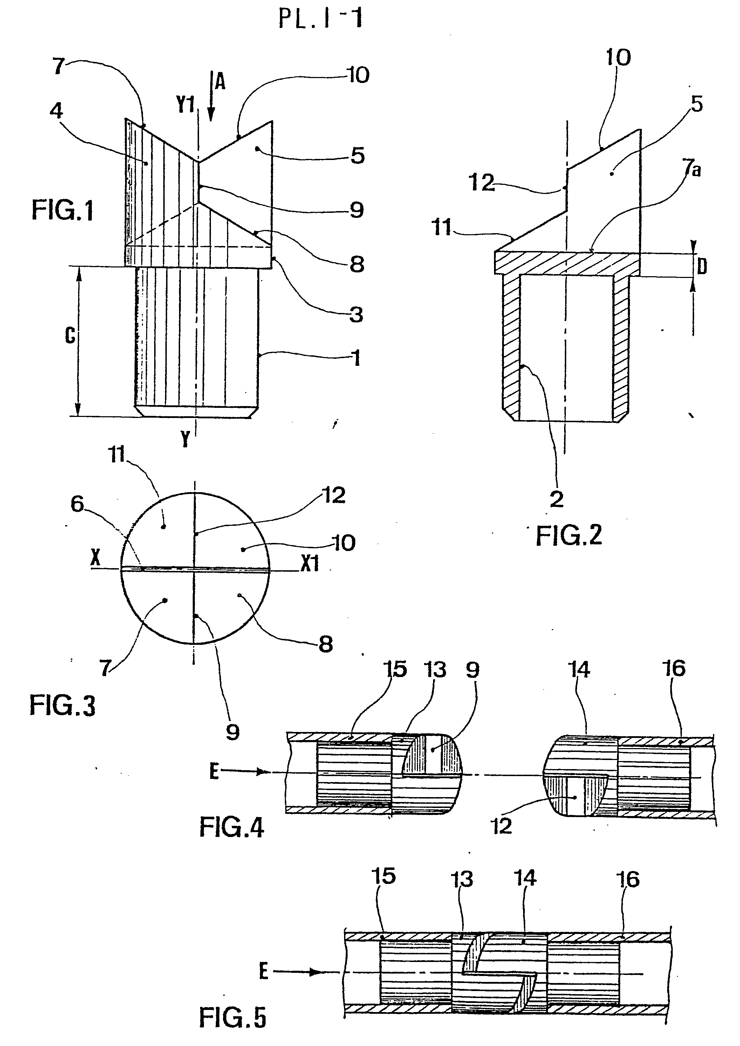

Le dispositif suivant l'invention qui a été réalisé pour atteindre ces objectifs est décrit par les figures 1 à 5.

Ce dispositif est constitué par un bloc en matière plastique, présentant un axe de symétrie Y-Y1, qui comporte une zone d'emboîtement cylindrique (1) de diamètre extérieur égal à 18,4 mm et de hauteur C égale à 19 mm avec un évidement intérieur (2) de 14,4 mm de diamètre. Une section cylindrique intermédiaire (3) de 20 mm de diamètre extérieur et de hauteur D égale à 4 mm sépare la zone d'emboîtement de la zone de raccordement. Celle-ci comporte deux demi-cylindres (4) et (5) séparés par une fente (6) de 0,1 mm d'épaisseur, suivant un plan axial, qui s'étend sur tout le diamètre du cylindre, et dont le fond est au niveau de la ligne diamètrale (7a). C'est à ce niveau que les deux demi-cylindres sont rendus solidaires de la section intermédiaire (3).

Chacun des demi-cylindres (4) et (5) est limité par deux plans parallèles, perpendiculaires au plan de la fente (6), et séparés par un décrochement sous forme d'un plan axial perpendiculaire à la fente (6). Le demi-cylindre (4) est limité par les plans (7) et (8) et par le plan de décrochement (9). Le demi-cylindre (5) est limité par les plans (10) et (11) et par le plan de décrochement (12). Les plans (7), (9) et (8) sont respectivement symétriques par rapport à l'axe Y-Y1 des plans (10), (12) et (11). Les plans (10) et (11), ainsi que les plans (7) et (8) ont une inclinaison par rapport à l'axe de révolution de 15 à 80°. Dans le cas présent, cette inclinaison est de environ 60°.

Les figures 4 et 5 montrent clairement comment deux dispositifs (13) et (14), identiques à celui qui vient d'être décrit, peuvent être enfoncés dans les extrémités de deux tronçons de tubes (15) et (16) en acier inoxydable de 18,4/20 mm. On voit que, lorsqu'on rapproche les deux tronçons ainsi équipés, les surfaces de raccordement des deux dispositifs s'engagent l'une dans l'autre. Une fois l'engagement réalisé, on comprend qu'en entraînant en rotation le tronçon (15) vu selon E dans le sens inverse des aiguilles d'une montre, le tronçon (16) sera entraîné en rotation. Par ailleurs, grâce aux décrochements (9) et (12), il n'y aura pas de risque de désaccouplement en cas d'à-coup dans la rotation; il sera même possible de faire tourner la ligne de tubes en sens inverse.

On voit qu'un tel dispositif est prévu pour fonctionner en compression, ce qui veut dire que le déplacement de la ligne de tubes à travers l'installation de traitement doit être effectué par poussée depuis l'entrée. Côté sortie, une légère traction sur les tronçons de tubes permet de les désolidariser les uns des autres. On sépare ensuite facilement les dispositifs des tronçons de tubes dans lesquels leur zone d'emboîtement est enfoncée.

De nombreux modes de réalisation du dispositif suivant l'invention sont réalisables. On utilisera dans chaque cas, suivant les conditions de traitement, les matières les mieux appropriées à la réalisation du dispositif. Il pourra s'agir de matières plastiques telles que le chlorure de polyvinyle, le polyéthylène, le polytétrafluoréthylène, ou toute autre matière plastique convenable. On pourra aussi utiliser des élastomères naturels synthétiques. Dans certains cas, on pourra même associer des élastomères et des matières plastiques ou utiliser certains copolymères combinant les avantages de ces matériaux.

Comme cela a été dit plus haut, la zone d'emboîtement du dispositif peut être modifiée notablement en fonction des besoins. On peut lui donner une forme extérieure légèrement conique pour améliorer le serrage. On peut aussi prévoir un ou plusieurs reliefs annulaires pour accroître l'étanchéité. On peut aussi prévoir le montage d'un joint torique dans une gorge annulaire. On peut aussi, au contraire, prévoir des orifices permettant de faire circuler un fluide à l'intérieur.

D'une façon générale, les dimensions de la zone d'emboîtement sont aisément déterminées par l'homme de l'art en fonction de la nature des matériaux en présence, des épaisseurs de paroi des tubes et des couples à transmettre. -

Du côté de la zone de raccordement, il est possible de réaliser les surfaces de raccordement d'un grand nombre, de façons différentes. Dans le mode de réalisation, qui vient d'être décrit, on voit que le motif de la surface de raccordement ne se répète que deux fois autour de la circonférence. Il s'agit là de l'une des réalisations les plus simples. On peut aussi, si on le désire, réaliser autour de la circonférence trois motifs identiques occupant chacun un secteur angulaire de 120° ou encore quatre motifs ou même davantage. La forme des surfaces en relief et en creux pourra être extrêmement variable suivant les besoins. On pourra, si on le désire, donner aux surfaces en prise l'une de l'autre, une inclinaison telle que les efforts qui se produisent au cours de la rotation aient une résultante le long de l'axe tendant à rapprocher les deux dispositifs engagés l'un dans l'autre. .

Bien d'autres modes de réalisation du dispositif suivant l'invention sont possibles.

## Revendications

1. Dispositif de raccordement amovible permettant de relier entre eux par simple coulissement des tronçons de tubes cylindriques (15, 16) disposés en ligne, et de transmettre un couple de rotation, caractérisé en ce qu'il est constitué de deux pièces élémentaires identiques (13-14) qui présentent, lorsqu'elles sont assemblées, une surface extérieure de révolution dont le plus grand diamètre (3) ne dépasse pas sensiblement celui des tubes à relier, chaque pièce comportant une zone d'emboîtement mâle (1) à une extrémité et une zone de raccordement (4, 5) à l'autre extrémité, la surface de raccordement présentant un motif élémentaire comportant des reliefs et des creux (10, 12, 11) répété au moins deux fois autour de la circonférence, ce motif élémentaire ayant un axe de symétrie passant par l'axe de révolution (Y-Y1) et perpendiculaire à celui-ci.

2. Dispositif suivant la revendication 1, caractérisé en ce que la zone d'emboîtement (1) est sensiblement cylindrique ou conique et présente des dimensions extérieures telles qu'elle s'emboîte avec serrage élastique dans les extrémités des tubes, et en ce que la surface de raccordement comporte deux motifs identiques séparés par un plan axial (6), la surface de chaque motif comportant au moins un plan perpendiculaire au plan axial (10, 11), ce plan ayant une inclinaison par rapport à l'axe de révolution de 15 à 80°.

3. Dispositif suivant la revendication 2, caractérisé en ce que la surface de chaque motif comporte au moins deux plans sensiblement parallèles entre eux (10, 11), séparés par au moins un plan de décrochement (12) sensiblement axial.

## Patentansprüche

1. Vorrichtung zum lösbaren Verbinden zweier ausgefluchteter zylindrischer Rohrabschnitte durch einfaches Verschieben und zum Übertragen eines Drehmoments, dadurch gekennzeichnet, daß die Vorrichtung durch zwei identische Grundteile (13, 14) gebildet ist, die im zusammengesetzten Zustand eine äußere Umlauffläche haben, deren größter Durchmesser (3) denjenigen der zu verbindenden Rohre nicht wesentlich übersteigt, daß jedes Teil an einem Ende eine Einsteckzone (1) und am anderen Ende eine Verbindungszone (4, 5) aufweist, daß die Verbindungszone eine Grundform mit Erhebungen und Ausnehmungen (10, 12, 11) aufweist, die sich um den Umfang wenigstens zweimal wiederholen, und daß die Grundform eine Symmetrieachse aufweist, die durch die Drehachse (Y-Y1) hindurchtritt und hierzu senkrecht ist.

2. Vorrichtung nach Anspruch 1, dadurch gekennzeichnet, daß die Einsteckzone (1) im wesentlichen zylindrisch oder konisch ist und derartige Außenabmessungen aufweist, daß sie in die Enden der Rohre mit elastischer Klemmung eingreift, und daß die Verbindungsfläche zwei durch eine axiale Ebene (6) getrennte identische Formen aufweist, wobei die Oberfläche jeder Form wenigstens eine zur axialen Ebene (10, 11) senkrechte Ebene und diese Ebene eine Neigung von 15° bis 80° gegenüber der Drehachse aufweisen.

3. Vorrichtung nach Anspruch 2, dadurch gekennzeichnet, daß die Oberfläche jeder Form wenigstens zwei im wesentlichen zueinander parallele Ebenen (10, 11) aufweist, die durch wenigstens eine im wesentlichen axiale Absatzebene (12) getrennt sind.

## Claims

1. A removable connecting device capable of interconnecting cylindrical tube portions (15, 16) which are disposed in a row, and transmitting a rotary torque, characterised in that it comprises two identical elementary members (13-14) which, when they are assembled, have an outside surface of revolution whose largest diameter (3) does not substantially exceed the diameter of the tubes to be connected, each member comprising a male engagement region (1) at one end and a connection region (4, 5) at the other end, the connecting surface having an elementary pattern comprising raised portions and hollow portions (10, 12, 11) and repeated at least twice around the circumference, the elementary pattern having an axis of symmetry which passes through the axis of revolution (Y-Y1) and which is perpendicular thereto.

2. A device according to claim 1 characterised in that the engagement region (1) is substantially cylindrical or conical and has outside dimensions such that it is engaged with a resilient gripping action into the ends of the tubes, and that the connecting surface has two identical patterns which are limited by an axial plane (6), the surface of each pattern comprising at least one plane which is perpendicular to the axial plane (10, 11), said plane being inclined relative to the axis of revolution at an angle of from 15 to 80°.

3. A device according to claim 2 characterised in that the surface of each pattern comprises at least two planes which are substantially parallel to each other (10, 11) and which are separated by at least one substantially axial interruption plane (12).

0 008 995

PL.1-1

FIG.1

FIG.2

FIG.3

FIG.4

FIG.5